# FASCICULE DE BREVET EUROPEEN

(11) **EP 4 381 276 B1**
(45) Date de publication et mention de la délivrance du brevet: **15.04.2026**
(21) Numéro de dépôt: 22757987.7
(22) Date de dépôt: 02.08.2022
(51) Int. Cl.: G01N 15/1404, G01N 15/1434, G01N 15/14, G01N 15/01

(54) **INSTALLATION DE CYTOMÉTRIE EN FLUX COMPORTANT UN SYSTÈME DE DÉTECTION OPTIQUE, NOTAMMENT POUR LE TRAITEMENT DE CELLULES DU TYPE SPERMATOZOÏDE**
DURCHFLUSSZYTOMETRIEVORRICHTUNG MIT EINEM OPTISCHEN DETEKTIONSSYSTEM, INSBESONDERE ZUR BEHANDLUNG VON SPERMAZELLEN
FLOW CYTOMETRY APPARATUS COMPRISING AN OPTICAL DETECTION SYSTEM, IN PARTICULAR FOR THE TREATMENT OF SPERM-TYPE CELLS

(30) Priorité: 04.08.2021 FR 2108469
(43) Date de publication de la demande: 12.06.2024
(73) Titulaire: Univers 2020, 61300 Saint-Ouen-sur-Iton (FR)
(72) Inventeur: SCHMITT, Eric, 53700 VILLAINES LA JUHEL (FR); DECAUDIN, Jean-Michel, 30900 NIMES (FR)
(74) Mandataire: Santarelli
(86) Numéro de dépôt international: PCT/FR2022/051549
(87) Numéro de publication internationale: WO 2023/012436

(56) Documents cités:
- EP-A1- 0 786 079
- US-A1- 2015 268 244
- US-A1- 2018 095 022
- US-A1- 2018 143 182

## Description

### DOMAINE DE L'INVENTION

L'invention a trait d'une manière générale à la cytométrie en flux, notamment pour le traitement de cellules du type spermatozoïde, et en particulier pour le sexage de la semence animale, par exemple bovine.

L'invention concerne plus particulièrement une installation de cytométrie en flux comportant un système de détection optique configuré pour différencier les cellules de semence animale.

### ARRIERE-PLAN TECHNOLOGIQUE

On connaît depuis de nombreuses années des installations de cytométrie en flux comportant des systèmes de détection optiques configurés pour différencier des cellules de semence animale.

Ces installations permettent de trier les cellules, en particulier les spermatozoïdes, de sorte à isoler les cellules présentant un chromosome X de celles présentant un chromosome Y.

Ces installations sont typiquement pourvues d'un dispositif d'alimentation configuré pour générer un jet de cellules en sortie d'une buse, du système de détection optique qui est configuré pour examiner le jet de cellules en vue de différencier le type de cellule, et d'un dispositif de tri configuré pour appliquer une charge prédéterminée à chaque cellule différenciée, la charge prédéterminée étant associée au résultat de la différenciation, autrement dit au type de cellule, ainsi que des récipients de collecte des cellules différenciées et triées.

De telles installations sont notamment appelées « jet-in-air sorter » en terminologie anglo-saxonne.

A noter que ces installations sont aussi pourvues d'unités de contrôle et de commande qui sont connectées au dispositif d'alimentation, au système de détection optique et au dispositif de tri, et qui sont configurées pour traiter certaines informations représentatives de certains paramètres en vue de contrôler et commander les dispositifs et système auxquels elles sont connectées. Ces paramètres peuvent par exemple correspondre au débit du jet de cellules, aux types de cellule ou encore aux charges prédéterminées qui y sont associées.

Les systèmes de détection optiques des installations de cytométrie en flux sont généralement basées sur des technologies utilisant la fluorescence et sont pourvus d'un laser d'excitation configuré pour émettre un faisceau de lumière et d'un organe de mise en forme du faisceau de lumière qui est configuré pour focaliser le faisceau de lumière à l'endroit où passe le jet de cellules.

Ces systèmes de détection optiques pour installations de cytométrie en flux sont pourvus aussi d'organes de collection et d'organes de détection disposés à la fois dans une direction d'émission du faisceau laser et dans une direction orthogonale à la direction d'émission du faisceau laser.

Dans de tels systèmes de détection optiques pour installations de cytométrie en flux, les organes de détection sont des capteurs du type photomultiplicateur, tandis que les organes de collection sont des équipements optiques du type lentille microscopique, offrant un très fort grandissement, notamment de l'ordre de 50.

Ces systèmes de détection optiques pour installations de cytométrie en flux nécessitent d'être réglés pour obtenir le résultat escompté, à savoir différencier les cellules en vue de les trier.

Or, en pratique, les réglages nécessaires sont complexes car il est particulièrement difficile de faire coïncider le point de focalisation du laser avec les points de focalisation des organes de collection à très fort grandissement, et aussi avec le jet de cellules, voire même avec les cellules à l'intérieur du jet de cellules.

A noter qu'il est souvent nécessaire de dégrader le réglage de ces systèmes de détection optique pour arriver à faire coïncider les points de focalisation avec le jet de cellules, ce qui est particulièrement dommage eu égard au coût des équipements que ces systèmes comportent. Un cytomètre de flux conforme à l'état de la technique est décrit dans la demande de brevet US2018095022A1.

### OBJET DE L'INVENTION

L'invention vise à fournir une installation de cytométrie en flux, notamment pour le traitement de cellules du type spermatozoïde, comportant un système de détection optique qui soit particulièrement commode et performant, autant pour son réglage qu'en utilisation, tout en étant au surplus particulièrement économique.

L'invention propose à cet effet, sous un premier aspect, une installation de cytométrie en flux, notamment pour le traitement de cellules du type spermatozoïde et en particulier pour le sexage de semence animale, comportant un système de détection optique configuré pour différencier, selon des paramètres prédéterminés, une pluralité de cellules dans un jet de telles cellules dirigé vers une zone de différenciation, ledit système de détection optique étant pourvu d'une source de rayonnement lumineux configurée pour émettre un rayonnement lumineux focalisé sur ladite zone de différenciation, au moins un organe de détection configuré pour détecter une quantité de lumière réémise par lesdites cellules qui sont illuminées, et au moins un organe de collection qui est focalisé, d'un premier côté, sur ladite zone de différenciation et d'un second côté opposé audit premier côté, sur ledit au moins un organe de détection ; caractérisée en ce que ledit système optique de détection est configuré de sorte que ledit au moins un organe de collection présente un grandissement inférieur à 10 et ledit au moins un organe de détection présente une zone de vision ayant une surface au moins 10 fois supérieure à une surface du jet de cellules à l'endroit de ladite zone de différenciation.

En d'autres termes, l'installation de cytométrie en flux selon l'invention est pourvue d'un système de détection optique ayant au moins un organe de collection dont le grandissement est particulièrement faible, bien inférieur aux grandissements utilisés par exemple en microscopie comme dans l'art antérieur visé ci-dessus. A noter que ce type d'équipement optique a l'avantage d'être beaucoup moins onéreux que ceux de la microscopie.

Au surplus, l'installation de cytométrie en flux selon l'invention est pourvue d'un système de détection optique ayant au moins un organe de détection dont la zone de vision est bien supérieure à la surface du jet de cellules, sans que cela n'impacte la différenciation proprement dite des cellules.

La présente invention part du principe que ce qui est important est de collecter la lumière réémise par les cellules illuminées dans la zone de différenciation. Il s'agit de la détection de flux lumineux. Il ne s'agit pas de capter une image des cellules illuminées.

Cela est rendu possible dans l'installation selon l'invention car ledit au moins un organe de détection a la capacité de détecter, au milieu d'une grande surface (ici la zone de vision), des éléments particuliers (ici des cellule) qui émettent plus de lumière que d'autres.

Il s'agit donc seulement de détecter que certaines cellules émettent plus de lumière que d'autres pour différencier ces cellules.

A noter par exemple que le rayonnement lumineux peut induire de la fluorescence sur les cellules, de sorte que l'organe de détection est configuré pour détecter une quantité de lumière réémise par exemple par fluorescence ou diffusion.

En d'autres termes, la présente invention montre qu'il n'est pas nécessaire de fortement zoomer sur la zone de différenciation et donc sur les cellules (qui sont particulièrement petites) afin de remplir la surface de la zone de vision de l'organe de détection pour mieux différencier ces cellules.

Au surplus, dans l'installation selon l'invention, l'utilisation d'au moins un organe de collection ayant un faible grandissement permet de disposer d'un très grand champ de visibilité et donc d'une très grande latitude de mise au point.

En particulier, la distance de mise au point est très grande de sorte qu'il est particulièrement commode d'agencer les composants du système de détection optique de sorte que la zone de différenciation, où se trouvent notamment le rayon lumineux focalisé et le jet de cellules, peut toujours être visible dans la zone de vision de l'organe de détection.

Autrement dit, la mise au point de l'installation selon l'invention n'est pas compliquée et le positionnement du jet de cellules admet une certaine tolérance, par exemple jusqu'à +/- 1 mm. Une telle tolérance n'était pas envisageable dans l'art antérieur.

Selon des caractéristiques simples, commodes et économiques de l'installation selon l'invention, ledit grandissement dudit au moins un organe de collection est inférieur à 8, préférentiellement inférieur à 5, et encore préférentiellement inférieur à 2 ; tandis que le rapport de ladite surface de ladite zone de vision dudit au moins un organe de détection sur ladite surface dudit jet de cellules est compris entre environ 10 et environ 1000, préférentiellement entre 50 et 500, préférentiellement encore entre 150 et 350, et préférentiellement encore environ égal à 250.

D'autres caractéristiques simples, commodes et économiques de l'installation selon l'invention sont présentées ci-dessous.

Ledit au moins un organe de collection présente une première lentille biconvexe agencée dudit premier côté et focalisée sur ladite zone de différenciation, une seconde lentille biconvexe agencée dudit second côté et focalisée sur ledit au moins un organe de détection, et optionnellement un élément de filtration interposé entre lesdites première et seconde lentilles biconvexes.

Ladite première lentille biconvexe est configurée pour collecter la lumière réémise par lesdites cellules illuminées par ladite source de rayonnement lumineux dans ladite zone de différenciation, et ladite seconde lentille biconvexe est configurée pour focaliser ladite lumière collectée vers ladite zone de vision dudit au moins un organe de détection.

Ledit au moins un organe de détection est un détecteur photoélectrique sensible, par exemple un photomultiplicateur ou une photodiode.

Ledit système de détection optique comporte deux organes de collection et deux organes de détection, dont l'un desdits organes de collection et l'un desdits organes de détection sont disposés dans une direction d'émission dudit rayon lumineux, et dont l'autre desdits organes de collection et l'autre desdits organes de détection sont disposés dans une direction orthogonale à ladite direction d'émission dudit rayon lumineux.

Ladite source de rayonnement lumineux est un laser.

Ledit système de détection optique comporte en outre un dispositif de mise en forme dudit rayon lumineux issu de ladite source, lequel dispositif présente un expanseur de faisceau, une lentille cylindrique de mise en forme dudit rayon et une lentille convergente focalisant ledit rayon lumineux agrandi et mis en forme vers ladite zone de différenciation.

Ladite lentille cylindrique présente une focale comprise entre environ 1 m et environ 5 m, et préférentiellement égale à environ 3 m.

L'installation comporte un dispositif d'alimentation configuré pour générer ledit jet de cellules et le diriger vers ladite zone de différenciation, lequel dispositif d'alimentation est au moins partiellement mobile indépendamment dudit système de détection optique.

Ledit dispositif d'alimentation comporte une chambre ayant une première cavité prévue pour recevoir un fluide de gaine et une seconde cavité prolongeant ladite première cavité, une aiguille d'injection desdites cellules qui est logée au moins partiellement dans ladite chambre et qui débouche dans ladite seconde cavité, au niveau de laquelle lesdites cellules et ledit fluide de gaine se rejoignent pour former ledit jet de cellules, ainsi qu'un organe de positionnement configuré pour déplacer ensemble au moins ladite chambre et ladite aiguille d'injection selon au moins une direction de déplacement.

Ledit organe de positionnement est configuré pour déplacer ladite chambre et ladite aiguille d'injection selon la direction d'émission du rayon lumineux provenant de ladite source de rayonnement lumineux et/ou selon la direction orthogonale à la direction d'émission du rayon lumineux provenant de ladite source de rayonnement lumineux ; de sorte à positionner ledit jet de cellules dans une position déterminée dans ladite zone de différenciation. A noter que ce positionnement est particulière simple et commode car, comme indiqué plus haut, le champ de visibilité de l'organe de détection et beaucoup plus grand que la zone de différenciation et le jet de cellules lui-même (ceci corrobore aussi la grande latitude de mise au point).

Ledit organe de positionnement est en outre configuré pour déplacer ladite chambre et ladite aiguille d'injection en rotation de sorte à orienter lesdites cellules dans ledit jet de cellules.

Lesdits paramètres prédéterminés pour différencier ladite pluralité de cellules dans un dit jet de telles cellules sont les chromosomes X et Y.

L'invention propose aussi, sous un second aspect, un procédé de traitement par cytométrie en flux, notamment de cellules du type spermatozoïde et en particulier pour le sexage de semence animale, à l'aide d'une installation telle que décrite ci-dessus, comportant une première étape de centrage sur ladite zone de différenciation, par le biais d'un squelette optique, dudit rayonnement lumineux focalisé et issu de ladite source de rayonnement lumineux et dudit au moins un organe de collection.

A noter qu'un tel réglage du système de détection optique est particulièrement simple à l'aide d'un squelette optique, lequel correspond classiquement à une structure métallique pré-montée qui permet de positionner les différents composants optiques dans des positions prédéterminées et de vérifier, à l'aide de cibles, que les différents points de focalisation de ces composants optiques coïncident dans la zone de différenciation.

Selon des caractéristiques simples, commodes et économiques du procédé selon l'invention, ladite installation comporte un dispositif d'alimentation configuré pour générer ledit jet de cellules et le diriger vers ladite zone de différenciation, lequel dispositif d'alimentation est au moins partiellement mobile indépendamment dudit système de détection optique ; et ledit procédé comporte une seconde étape de centrage dudit jet de cellules sur ladite zone de différenciation, indépendamment de ladite première étape de centrage.

A noter qu'un tel réglage du jet de cellules est aussi particulièrement simple puisqu'il n'y a pas à déplacer, en même temps que la chambre et l'aiguille d'injection, le système de détection optique qui est alors fixe.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés.
La figure 1 illustre schématiquement et partiellement, en perspective, une installation de cytométrie en flux notamment pour le traitement de cellules du type spermatozoïde et en particulier pour le sexage de semence animale.
La figure 2 illustre schématiquement en vue de dessus, un système de détection optique de l'installation de la figure 1.
La figure 3 illustre schématiquement un agrandissement de la focalisation d'un faisceau laser du système de détection optique avec un jet de cellules, en vue de dessus.
La figure 4 illustre schématiquement un agrandissement de la focalisation d'un faisceau laser du système de détection optique avec un jet de cellules, en vue de face.
La figure 5 illustre schématiquement en vue de dessus, un organe de collection et un organe de détection du système de détection optique, depuis le point de focalisation du faisceau laser qui coïncide avec le jet de cellules jusqu'à une zone de vision de l'organe de détection, ainsi qu'un agrandissement de l'intérieur de cette zone de vision.
La figure 6 est une vue assez similaire à celle de la figure 5, montrant l'influence qu'à un déplacement du jet de cellules par rapport au point de focalisation du faisceau laser.

### DESCRIPTION DETAILLEE D'EXEMPLES DE REALISATION

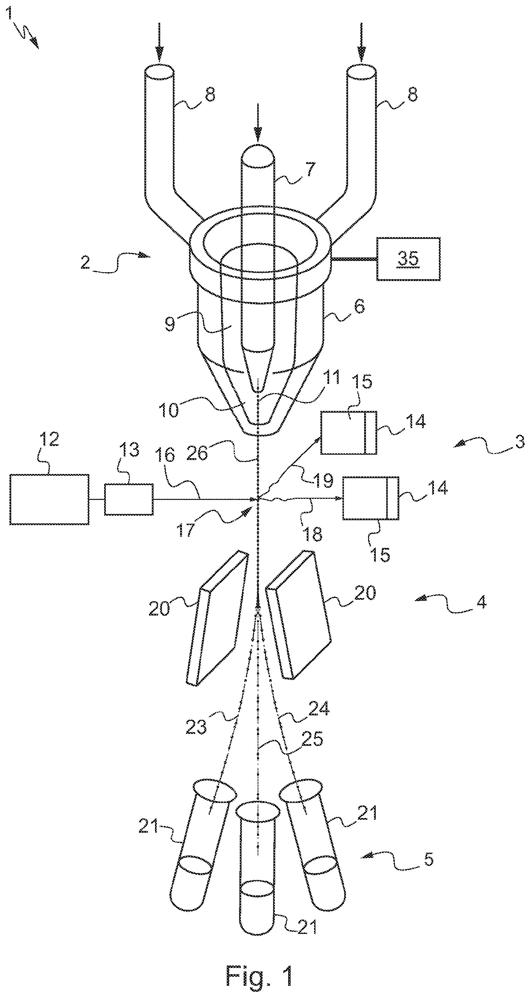

La figure 1 illustre une installation 1 de cytométrie en flux, en particulier ici pour le sexage de semence animale, notamment bovine.

Bien entendu, il pourrait s'agir de semence animale pour d'autres animaux que les bovins, par exemples les équins, ou porcins, ou ovins ou encore d'autres animaux.

Par sexage de semence animale il faut comprendre la différenciation et le tri de cellules du type spermatozoïde, en fonction du chromosome qu'elles comportent.

En particulier, la différenciation se fait en fonction de paramètres prédéterminés pour différencier une pluralité de cellules 26 dans un jet 11 de telles cellules, et ces paramètres sont les chromosomes X et Y que peuvent comporter les spermatozoïdes.

L'installation 1 décrite ci-dessous est du type « jet-in-air sorter » en terminologie anglo-saxonne.

L'installation 1 comporte un dispositif d'alimentation 2 configuré pour générer un jet 11 d'une pluralité de cellules 26 et le diriger vers une zone de différenciation 17 de l'installation 1.

Le dispositif d'alimentation 2 peut comporter une chambre 6 ayant une première cavité 9 prévue pour recevoir un fluide de gaine via des conduits d'alimentation 8 qui débouchent dans cette première cavité 9, ainsi qu'une seconde cavité 10 prolongeant la première cavité 9 du côté d'un orifice de sortie de la chambre dirigé vers la zone de différenciation 17.

Le dispositif d'alimentation 1 peut en outre comporter une aiguille d'injection 7 prévue pour recevoir les cellules 26 via un conduit complémentaire d'alimentation (non représentée).

L'aiguille d'injection 7 est logée au moins partiellement dans la chambre 6 et débouche dans la seconde cavité 10, où les cellules 26 sont distribuées par cette aiguille 7.

C'est dans cette seconde cavité 10 que les cellules 26 et le fluide de gaine se rejoignent pour former le jet de cellules 11.

Le dispositif d'alimentation 2 peut en outre comporter un organe de positionnement 35 configuré pour déplacer ensemble la chambre 6 et l'aiguille d'injection 7 selon une ou plusieurs directions de déplacement (voir ci-après).

Il peut par exemple s'agir d'un organe de positionnement 35 formé d'un mécanisme à vis micrométriques et à pivot.

L'installation 1 comporte en outre un système de détection optique 3 qui est configuré pour examiner le jet de cellules 11 en vue de différencier le type de cellule.

En particulier, le système de détection optique 3 est ici configuré pour différencier, selon les paramètres chromosomiques X et Y, une pluralité de cellules 26 dans le jet de telles cellules 11 dirigé vers la zone de différenciation 17. A noter que les cellules 26 à observer peuvent réémettre de la lumière par fluorescence pour permettre leur différenciation.

Le système de détection optique 3 peut être pourvu d'une source de rayonnement lumineux 12 configurée pour émettre un rayon lumineux 16 focalisé sur la zone de différenciation 17. Il peut par exemple s'agir d'un laser.

Le système de détection optique 3 peut comporter un dispositif 13 de mise en forme du rayon lumineux 16 issu de la source 12.

Le système de détection optique 3 peut en outre comporter deux organes de détection 14 configurés pour détecter une quantité de lumière réémise, ici par fluorescence, par les cellules 26 qui sont illuminées.

Le système de détection optique 3 peut aussi comporter deux organes de collection 15 qui sont focalisés, d'un premier côté, sur la zone de différenciation 17 et d'un second côté opposé au premier côté, sur les organes de détection 14 respectifs.

L'un des organes de collection 15 et l'un des organes de détection 14 sont ici disposés dans la direction d'émission du rayon lumineux 16, de sorte collecter un premier faisceau lumineux réémis 18, sensiblement dans l'axe principal du rayon lumineux 16.

L'autre des organes de collection 15 et l'autre des organes de détection 14 sont disposés dans la direction orthogonale à la direction d'émission du rayon lumineux 16, de sorte collecter un second faisceau lumineux réémis 19, sensiblement perpendiculaire à l'axe principal du rayon lumineux 16.

A noter que l'organe de positionnement 35 du dispositif d'alimentation 2 est ici configuré de sorte que le dispositif d'alimentation 2 est au moins partiellement mobile indépendamment du reste de l'installation 1, et en particulier vis-à-vis du système de détection optique 3.

En particulier, l'organe de positionnement 35 peut être configuré pour déplacer la chambre 6 et l'aiguille d'injection 7 selon la direction d'émission du rayon lumineux 16 provenant de la source de rayonnement lumineux 12.

L'organe de positionnement 35 peut aussi être configuré pour déplacer la chambre 6 et l'aiguille d'injection 7 selon la direction orthogonale à la direction d'émission du rayon lumineux 16 provenant de la source de rayonnement lumineux 12.

De tels déplacements permettent notamment de positionner le jet de cellules 11 dans une position déterminée dans la zone de différenciation 17.

L'installation 1 peut en outre comporter un dispositif de tri 4 configuré pour appliquer une charge prédéterminée à chaque cellule 26 différenciée.

La charge prédéterminée est associée au résultat de la différenciation, autrement dit au type de cellule, X ou Y.

Le dispositif de tri 4 peut par exemple comporter des plaques conductrices 20 configurées pour former des électrodes qui sont capables de charger positivement ou négativement les cellules 26 différenciées, en fonction du résultat de la différenciation.

Le dispositif de tri 4 est aussi configuré pour guider les cellules différenciées et chargées vers des récipients de collecte 21 configurés pour recevoir les cellules 26 ainsi triées.

Ici, l'installation 1 comporte trois récipients de collecte 21 configurés pour recevoir respectivement trois flux de cellules 26, dont un premier flux 23 correspondant par exemple aux cellules chargées positivement et identifiées comme étant Y, un deuxième flux 24 correspondant par exemple aux cellules chargées négativement et identifiées comme étant X, et un troisième flux 25 correspondant aux cellules non chargées et non différenciées.

L'installation 1 peut en outre comporter une ou plusieurs unités de contrôle et de commande (non représentées) qui sont connectées au dispositif d'alimentation 2, au système de détection optique 3 et au dispositif de tri 4, et qui sont configurées pour traiter certaines informations représentatives de certains paramètres en vue de contrôler et commander les dispositifs et système auxquels elles sont connectées.

Ces paramètres peuvent par exemple correspondre au débit du jet de cellules, aux types de cellule ou encore aux charges prédéterminées qui y sont associées.

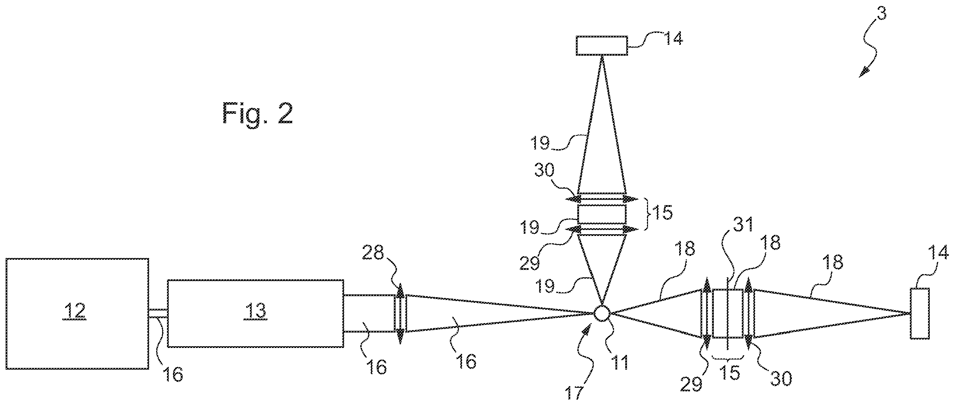

La figure 2 illustre plus en détail le système de détection optique 3.

Ainsi qu'indiqué plus haut, la source de rayonnement lumineux 12 est ici un laser.

Le dispositif 13 de mise en forme du rayon lumineux 16 peut présenter un agrandisseur de faisceau, une lentille cylindrique et une lentille convergente 28 focalisant le rayon lumineux 16 agrandi vers la zone de différenciation 17. La lentille cylindrique peut présenter une focale égale à environ 3 m.

Une telle lentille cylindrique permet notamment de générer deux traits de focalisation perpendiculaires et distants d'environ 1 mm au point de focalisation de la lentille convergente 28, lequel se trouve dans la zone de différenciation 17.

Cela permet donc de générer un rayon lumineux dont l'extrémité a la forme d'un segment dans la zone de différenciation 17 (voir ci-après).

A noter que sur la figure 2, l'expanseur, ou agrandisseur, et la lentille cylindrique se trouvent dans le bloc référencé 1 » pour identifier le dispositif de mise en forme.

Ainsi qu'expliqué aussi plus haut, l'un des organes de collection 15 et l'un des organes de détection 14 sont disposés dans la direction d'émission du rayon lumineux 16 ; tandis que l'autre des organes de collection 15 et l'autre des organes de détection 14 sont disposés dans la direction orthogonale à la direction d'émission du rayon lumineux 16.

Chacun des organes de collection 15 peut présenter une première lentille biconvexe 29 agencée d'un premier côté et focalisée sur la zone de différenciation 17.

Les premières lentilles biconvexes 29 sont configurées pour collecter la lumière réémise par les cellules 26 illuminées par la source de rayonnement lumineux 12 dans la zone de différenciation 17, à savoir collecter respectivement le premier faisceau lumineux réémis 18 et le second faisceau lumineux réémis 19.

Chacun des organes de collection 15 peut présenter une seconde lentille biconvexe 30 agencée d'un second côté, opposé au premier côté, et focalisée sur les organes de détection 14 respectifs.

Un élément de filtration 31 peut être interposé entre les première et seconde lentilles biconvexes 29 et 30 de l'organe de collection 15 qui est disposé dans la direction d'émission du rayon lumineux 16, dans le premier faisceau lumineux réémis 18.

L'élément de filtration 31 est configuré pour filtrer le rayonnement lumineux de la source 12 et transmettre la fluorescence réémise par les cellules 26 et formant le premier faisceau lumineux réémis 18.

Les secondes lentilles biconvexes 30 sont configurées pour focaliser la lumière collectée, voire filtrée, vers une zone de vision des organes de détection 14 respectifs.

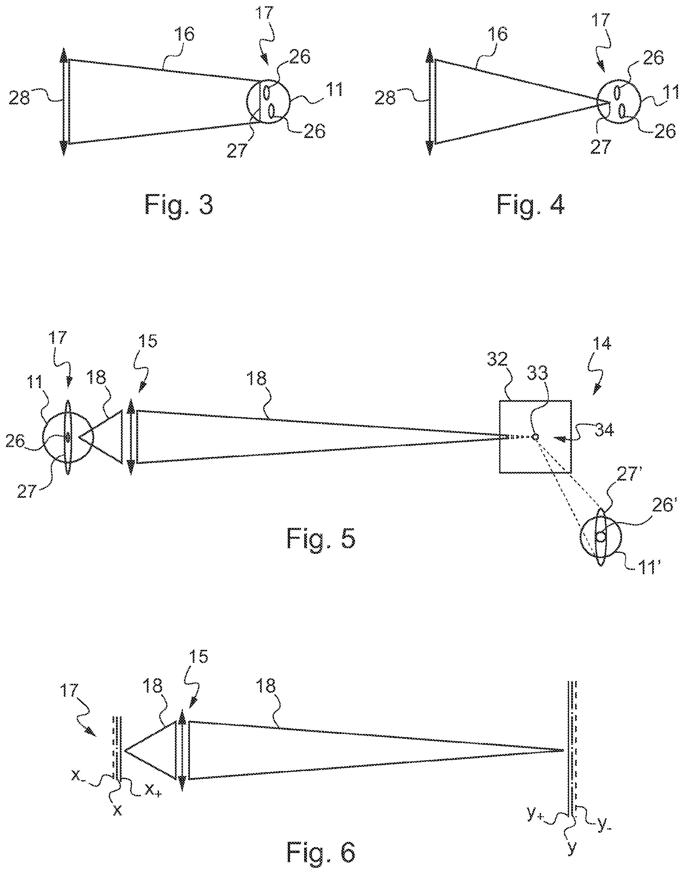

Les organes de détection 14 sont ici des photomultiplicateurs ou des photodiodes et sont pourvus, ainsi qu'indiqué plus haut, d'une zone de vision 32 (figure 5) ayant une surface prédéterminée.

Les figures 3 et 4 illustrent en détail l'interaction entre le rayon lumineux 16 focalisé par la lentille cylindrique et la lentille convergente 28 et les cellules 26 dans le jet de cellules 11, au niveau de la zone de différenciation 17.

Le jet de cellules 11 présente une dimension de l'ordre d'environ 50 à environ 100 microns de diamètre et les cellules 26 présentent une taille de l'ordre d'environ 10 microns.

Ainsi qu'expliqué plus haut, l'extrémité du rayon lumineux 16 a la forme d'un segment 27, sensiblement elliptique, dont la grande longueur est ici environ égale au diamètre du jet de cellule 11.

En d'autres termes, le point de focalisation du rayon lumineux 16 est « allongé », sous forme d'un trait, pour favoriser l'illumination des cellules 26 dans le jet de de cellules 11 lorsqu'elles traversent la zone de différenciation 17, quel que soit la position des cellules 26 dans le jet de cellules 11.

A noter aussi que l'organe de positionnement 35 du dispositif d'alimentation 2 peut en outre être configuré pour déplacer la chambre 6 et l'aiguille d'injection 7 en rotation de sorte à orienter les cellules 26 dans le jet de cellules 11, pour que ces dernières soient disposées perpendiculairement au faisceau lumineux incident.

La figure 5 illustre en détail ce qui se passe après la zone de différenciation 17 et en particulier ce qui est détecté par l'organe de détection 14 qui se trouve dans la direction d'émission du rayon lumineux 16.

A noter qu'il s'agit donc ici du premier faisceau lumineux réémis 18 ; mais que le principe est sensiblement le même pour le second faisceau lumineux réémis 19 détecté par l'organe de détection 14 qui se trouve dans la direction orthogonale à la direction d'émission du rayon lumineux 16.

Le système optique de détection 3 est configuré de sorte que les organes de collection 15, et en particulier les premières et deuxièmes lentilles biconvexes 29 et 30, présentent ici un grandissement seulement de 2.

Ce grandissement de 2 est à comparer avec la taille des cellules, de l'ordre de 10 microns, et avec le diamètre du jet de cellules 11, de l'ordre de 50 à 100 microns, par exemple 70 microns.

Le système optique de détection 3 est en outre configuré de sorte que les organes de détection 14 présentent une zone de vision 32 ayant une surface 34 au moins 10 fois supérieure à une surface 33 du jet de cellules 11, et jusqu'à 1 000 fois supérieure, mais de préférence environ 250 fois supérieure.

Ceci est particulièrement visible sur la droite de la figure 5 où la surface 33 du jet ce cellule 11 est bien plus petite que la surface 34 de la zone de vision 32 de l'organe de détection 14.

Un tel rapport entre la surface 34 de la zone de vision 32 de l'organe de détection 34 et la surface 33 du jet de cellules 11 permet de s'assurer, que le jet de cellules 11 et donc les cellules 26 qui vont traverser le segment laser 27 dans la zone de différenciation 17, et par voie de conséquence la lumière réémise par ces cellules 26 et collectée peut être détectée.

En effet, comme le montre la représentation « virtuelle » sur la figure 5, tous ces éléments, dont le jet de cellules 11', la cellule 26' et le segment laser 27', se retrouvent largement dans la zone de vision 32 de l'organe de détection 14.

Cela corrobore en outre le fait que la distance de mise au point est très grande et donc le réglage de l'installation 1 est particulièrement simple.

Par exemple, pour sortir de la zone de vision 32 de l'organe de détection 14, il faudrait que le dispositif d'alimentation 2 soit translaté d'une distance de l'ordre du millimètre dans la direction orthogonale à la direction d'émission du rayon lumineux.

Il en est d'ailleurs de même sur l'axe de focalisation, ou en d'autres termes dans la direction d'émission du rayon lumineux. Ceci est illustré sur la figure 6, où l'on peut voir qu'une défocalisation, autrement dit un déplacement X- ou X+ du jet 11 d'une valeur A microns par rapport à une référence X, introduit une très légère défocalisation Y- ou Y+ de l'ordre de B microns dans la zone de vision 32 de l'organe de détection 14. Par exemple, si la valeur A est égale à environ 10 microns, la valeur B pourra être égale à seulement environ 40 microns.

On notera par ailleurs que la quantité de lumière récupérée par les organes de détection 14 est liée à l'ouverture numérique et non au grandissement.

Ici, puisque les organes de collection 14 et de détection 15 sont disposés le long des premiers et second faisceaux lumineux réémis, lesquels sont sensiblement perpendiculaires l'un par rapport à l'autre, l'ouverture numérique maximale théorique est d'environ 0,7.

En pratique, l'ouverture numérique pourrait être comprise entre environ 0,5 et 0,7, voire elle pourrait préférentiellement être égale à environ 0,65.

L'installation 1 décrite ci-dessus est particulièrement commode également en ce qu'elle simplifie considérablement le procédé de traitement par cytométrie en flux, notamment de cellules du type spermatozoïde et en particulier pour le sexage de semence animale, à l'aide de cette installation 1.

En effet, le procédé comporte une première étape de centrage sur la zone de différenciation 17, par le biais d'un squelette optique, du rayon lumineux 16 focalisé et issu de la source de rayonnement lumineux 12 et aussi des organes de collection 14.

A noter qu'une telle étape de centrage peut être assimilée à un réglage du système de détection optique 3. Ce réglage est particulièrement simple à l'aide d'un squelette optique, lequel correspond classiquement à une structure métallique pré-montée qui permet de positionner les différents composants optiques dans des positions prédéterminées et de vérifier, à l'aide de cibles, que les différents points de focalisation de ces composants optiques coïncident dans la zone de différenciation.

L'objectif visé est ainsi de ne pas avoir de réglage optique complexe à effectuer avant de pouvoir utiliser l'installation pour le traitement de cellules.

A noter que la détection de la lumière réémise par la cellule est optimale lorsque la cellule traverse le segment laser en son centre et au point exact de focalisation dans la zone de différenciation, et aussi que cette cellule est elle-même au foyer des deux organes de collection 14.

Pour ce faire, il ne reste plus qu'à procéder au réglage du jet de cellule vis-à-vis de la zone de différenciation, et donc par rapport au squelette optique qui se centre sur cette zone de différenciation où coïncident les différents points de focalisation des composants optiques susvisés.

Le procédé comporte donc une seconde étape de centrage du jet de cellules 11 sur la zone de différenciation 17, indépendamment de la première étape de centrage.

A noter qu'un tel réglage du jet de cellules est aussi particulièrement simple puisque l'installation 2 et en particulier l'organe de positionnement 35 permet de déplacer ensemble la chambre 6 et l'aiguille d'injection 7, sans déplacer le système de détection optique 3, lequel est alors fixe.

En variante, le ou les organes de collection peuvent présenter un grandissement inférieur à 8, préférentiellement inférieur à 5, ou encore préférentiellement inférieur à 2, voire même inférieur à 1.

Plus précisément encore, dans les bornes précitées, le ou les organes de collection peuvent présenter un grandissement compris entre 1 et 5, ou entre 5 et 8, ou encore plus précisément entre 1 et 3 ou encore entre 1 et 2 ; ou encore plus précisément un grandissement de l'ordre de 1 plutôt que de 2, ou bien de l'ordre de 0,5, de 3, de 4, de 5, de 6, de 7, de 8, voir même de 9.

En variante également, le rapport de la surface de la zone de vision du ou des organes de détection sur la surface du jet de cellules peut être compris entre environ 10 et environ 1000, préférentiellement entre 50 et 500, préférentiellement encore entre 150 et 350.

Des variantes non illustrées sont décrites ci-dessous.

L'installation pourrait comporter seulement un couple d'organes de collection/détection ou bien au contraire plus que deux couples d'organes de collection/détection, par exemple trois, quatre, cinq ou six, ou encore plus.

La source de rayonnement lumineux peut être par exemple une source laser diode ou laser led.

La source de rayonnement lumineux peut être différente d'une source laser.

La lentille cylindrique du dispositif de mise en forme du rayon lumineux présente une focale comprise entre environ 1 m et environ 5 m.

De nombreuses autres variantes sont possibles en fonction des circonstances, et l'on rappelle à cet égard que l'invention ne se limite pas aux exemples décrits et représentés.

## Revendications

1. Installation de cytométrie en flux, notamment pour le traitement de cellules du type spermatozoïde et en particulier pour le sexage de semence animale, comportant un système de détection optique (3) configuré pour différencier, selon des paramètres prédéterminés, une pluralité de cellules (26) dans un jet de telles cellules (11) dirigé vers une zone de différenciation (17), ledit système de détection optique étant pourvu d'une source de rayonnement lumineux (12) configurée pour émettre un rayon lumineux (16) focalisé sur ladite zone de différenciation (17), au moins un organe de détection (14) configuré pour détecter une quantité de lumière réémise par lesdites cellules (26) qui sont illuminées, et au moins un organe de collection (15) qui est focalisé, d'un premier côté, sur ladite zone de différenciation (17) et d'un second côté opposé audit premier côté, sur ledit au moins un organe de détection (14), ledit système optique de détection étant configuré de sorte que ledit au moins un organe de collection (15) présente un grandissement inférieur à 10; et **caractérisée en ce que**
ledit au moins un organe de détection (14) présente une zone de vision (32) ayant une surface (34) au moins 10 fois supérieure à une surface du jet de cellules (11) à l'endroit de ladite zone de différenciation (17).

2. Installation selon la revendication 1, **caractérisée en ce que** ledit grandissement dudit au moins un organe de collection (15) est inférieur à 8, préférentiellement inférieur à 5, et encore préférentiellement inférieur à 2 ; tandis que le rapport de ladite surface (34) de ladite zone de vision (32) dudit au moins un organe de détection (14) sur ladite surface dudit jet de cellules (11) est compris entre environ 10 et environ 1000, préférentiellement entre 50 et 500, préférentiellement encore entre 150 et 350, et préférentiellement encore environ égal à 250.

3. Installation selon l'une des revendications 1 et 2, **caractérisée en ce que** ledit au moins un organe de collection (15) présente une première lentille biconvexe (29) agencée dudit premier côté et focalisée sur ladite zone de différenciation (17), une seconde lentille biconvexe (30) agencée dudit second côté et focalisée sur ledit au moins un organe de détection (14), et optionnellement un élément de filtration (31) interposé entre lesdites première et seconde lentilles biconvexes (29, 30).

4. Installation selon la revendication 3, **caractérisée en ce que** ladite première lentille biconvexe (29) est configurée pour collecter la lumière émise par lesdites cellules (26) illuminées par ladite source de rayonnement lumineux (12) dans ladite zone de différenciation (17), et ladite seconde lentille biconvexe (30) est configurée pour focaliser ladite lumière collectée vers ladite zone de vision (32) dudit au moins un organe de détection (14).

5. Installation selon l'une quelconque des revendications 1 à 4, **caractérisée en ce que** ledit au moins un organe de détection (14) est un photomultiplicateur.

6. Installation selon l'une quelconque des revendications 1 à 5, caractérisée en ce ledit système de détection optique (3) comporte deux organes de collection (15) et deux organes de détection (14), dont l'un desdits organes de collection (15) et l'un desdits organes de détection (14) sont disposés dans une direction d'émission dudit rayon lumineux (16), et dont l'autre desdits organes de collection (15) et l'autre desdits organes de détection (14) sont disposés dans une direction orthogonale à ladite direction d'émission dudit rayon lumineux (16).

7. Installation selon rune quelconque des revendications 1 à 6, **caractérisée en ce que** ladite source de rayonnement lumineux (12) est un laser.

8. Installation selon l'une quelconque des revendications 1 à 7, **caractérisée en ce que** ledit système de détection optique (3) comporte en outre un dispositif (13) de mise en forme dudit rayon lumineux (16) issu de ladite source (12), lequel dispositif (13) présente un expanseur de rayon, une lentille cylindrique de mise en forme dudit rayon et une lentille convergente (28) focalisant ledit rayon lumineux (16) agrandi et mis en forme vers ladite zone de différenciation (17).

9. Installation selon la revendication 8, **caractérisée en ce que** ladite lentille cylindrique présente une focale comprise entre environ 1 m et environ 5 m, et préférentiellement égale à environ 3 m.

10. Installation selon l'une quelconque des revendications 1 à 9, **caractérisée en ce qu'**elle comporte un dispositif d'alimentation (2) configuré pour générer ledit jet de cellules (11) et le diriger vers ladite zone de différenciation (17), lequel dispositif d'alimentation (2) est au moins partiellement mobile indépendamment dudit système de détection optique (3).

11. Installation selon la revendication 10, **caractérisée en ce que** ledit dispositif d'alimentation (2) comporte une chambre (6) ayant une première cavité (9) prévue pour recevoir un fluide de gaine et une seconde cavité (10) prolongeant ladite première cavité (9), une aiguille d'injection (7) desdites cellules (26) qui est logée au moins partiellement dans ladite chambre (6) et qui débouche dans ladite seconde cavité (10), au niveau de laquelle lesdites cellules (26) et ledit fluide de gaine se rejoignent pour former ledit jet de cellules (11), ainsi qu'un organe de positionnement (35) configuré pour déplacer ensemble au moins ladite chambre (6) et ladite aiguille d'injection (7) selon au moins une direction de déplacement.

12. Installation selon la revendication 11, **caractérisée en ce que** ledit organe de positionnement (35) est configuré pour déplacer ladite chambre (6) et ladite aiguille d'injection (7) selon la direction d'émission du rayon lumineux (16) provenant de ladite source de rayonnement lumineux (12) et/ou selon la direction orthogonale à la direction d'émission du rayon lumineux (16) provenant de ladite source de rayonnement lumineux (12) ; de sorte à positionner ledit jet de cellules (11) dans une position déterminée dans ladite zone de différenciation (17).

13. Installation selon l'une des revendications 11 et 12, **caractérisée en ce que** ledit organe de positionnement (35) est en outre configuré pour déplacer ladite chambre (6) et ladite aiguille d'injection (7) en rotation de sorte à orienter lesdites cellules (26) dans ledit jet de cellules (11).

14. Installation selon l'une quelconque des revendications 1 à 13, **caractérisée en ce que** lesdits paramètres prédéterminés pour différencier ladite pluralité de cellules (26) dans un dit jet de telles cellules (11) sont les chromosomes X et Y.

15. Procédé de traitement par cytométrie en flux, notamment de cellules du type spermatozoïde et en particulier pour le sexage de semence animale, à l'aide d'une installation selon l'une quelconque des revendications 1 à 14, **caractérisé en ce qu'**il comporte une première étape de centrage sur ladite zone de différenciation, par le biais d'un squelette optique, dudit rayonnement lumineux focalisé et issu de ladite source de rayonnement lumineux et dudit au moins un organe de collection.

16. Procédé selon la revendication 15, **caractérisé en ce que** ladite installation comporte un dispositif d'alimentation (2) configuré pour générer ledit jet de cellules (11) et le diriger vers ladite zone de différenciation (17), lequel dispositif d'alimentation (2) est au moins partiellement mobile indépendamment dudit système de détection optique (3) ; et ledit procédé comporte une seconde étape de centrage dudit jet de cellules (11) sur ladite zone de différenciation (17), indépendamment de ladite première étape de centrage.

## Patentansprüche

1. Anlage zur Durchflusszytometrie, insbesondere zur Behandlung von spermienartigen Zellen und insbesondere zur Geschlechtsbestimmung von tierischem Samen, die ein optisches Detektionssystem (3) aufweist, das so eingerichtet ist, dass es gemäß vorbestimmten Parametern eine Vielzahl von Zellen (26) in einem Strahl solcher Zellen (11) unterscheidet, der auf einen Differenzierungsbereich (17) gerichtet ist, wobei das optische Detektionssystem mit einer Lichtstrahlquelle (12), die so eingerichtet ist, dass sie Lichtstrahlung (16) emittiert, der auf den Differenzierungsbereich (17) fokussiert ist, mindestens einem Detektor (14), der so eingerichtet ist, dass er eine von den beleuchteten Zellen (26) wieder emittierte Lichtmenge detektiert, und mit mindestens einer Sammelvorrichtung (15) ausgestattet ist, die auf der einen ersten Seite auf den Differenzierungsbereich (17) fokussiert ist und auf der einen zweiten Seite, die eine gegenüberliegende Seite der ersten Seite ist, auf den mindestens einen Detektor (14) fokussiert ist, wobei das optische Detektionssystem so eingerichtet ist, dass die mindestens eine Sammelvorrichtung (15) eine Vergrößerung von weniger als 10 beinhaltet; und **dadurch gekennzeichnet, dass** der mindestens eine Detektor (14) an der Stelle des Differenzierungsbereichs (17) einen Sichtbereich (32) beinhaltet, der eine Fläche (34) hat, die mindestens 10-mal größer ist als eine Fläche des Zellstrahls (11).

2. Anlage nach Anspruch 1, **dadurch gekennzeichnet, dass** die Vergrößerung der mindestens einen Sammelvorrichtung (15) kleiner als 8, vorzugsweise kleiner als 5 und noch vorzugsweise kleiner als 2 ist; während das Verhältnis der Fläche (34) des Sichtbereichs (32) des mindestens einen Detektors (14) zu der Fläche des Zellstrahls (11) zwischen etwa 10 und etwa 1000, vorzugsweise zwischen 50 und 500, mehr bevorzugt zwischen 150 und 350 und besonders bevorzugt etwa 250 beträgt.

3. Anlage nach einem der Ansprüche 1 und 2, **dadurch gekennzeichnet, dass** die mindestens eine Sammelvorrichtung (15) eine erste bikonvexe Linse (29), die auf der ersten Seite angeordnet und auf den Differenzierungsbereich (17) fokussiert ist, eine zweite bikonvexe Linse (30), die auf der zweiten Seite angeordnet und auf den mindestens einen Detektor (14) fokussiert ist, und optional ein Filterelement (31), das zwischen der ersten und zweiten bikonvexen Linse (29, 30) angeordnet ist, beinhaltet.

4. Anlage nach Anspruch 3, **dadurch gekennzeichnet, dass** die erste bikonvexe Linse (29) so eingerichtet ist, dass sie das von den Zellen (26) emittierte Licht, das von der Lichtstrahlquelle (12) in dem Differenzierungsbereich (17) ausgestrahlt wird, aufnimmt, und dass die zweite bikonvexe Linse (30) so eingerichtet ist, dass sie das gesammelte Licht auf den Sichtbereich (32) des mindestens einen Detektors (14) fokussiert.

5. Anlage nach einem der Ansprüche 1 bis 4, **dadurch gekennzeichnet, dass** der mindestens eine Detektor (14) ein Photomultiplikator ist.

6. Anlage nach einem der Ansprüche 1 bis 5, **dadurch gekennzeichnet, dass** das optische Detektionssystem (3) zwei Sammelvorrichtungen (15) und zwei Detektoren (14) aufweist, von denen eine der Sammelvorrichtungen (15) und einer der Detektoren (14) in einer Emissionsrichtung der Lichtstrahlung (16) angeordnet sind, und von denen die andere der Sammelvorrichtungen (15) und der andere der Detektoren (14) in einer Richtung im rechten Winkel zu der Emissionsrichtung der Lichtstrahlung (16) angeordnet sind.

7. Anlage nach einem der Ansprüche 1 bis 6, **dadurch gekennzeichnet, dass** die Lichtstrahlquelle (12) ein Laser ist.

8. Anlage nach einem der Ansprüche 1 bis 7, **dadurch gekennzeichnet, dass** das optische Detektionssystem (3) ferner eine Formungsvorrichtung (13) zum Formen der von der Quelle (12) stammenden Lichtstrahlung (16) aufweist, wobei die Vorrichtung (13) einen Strahlaufweiter, eine zylindrische Linse zum Formen der Strahlung und eine konvergierende Linse (28) beinhaltet, die die vergrößerte und geformte Lichtstrahlung (16) in Richtung des Differenzierungsbereichs (17) fokussiert.

9. Anlage nach Anspruch 8, **dadurch gekennzeichnet, dass** die zylindrische Linse eine Brennweite aufweist, die zwischen etwa 1 m und etwa 5 m und vorzugsweise etwa 3 m beträgt.

10. Anlage nach einem der Ansprüche 1 bis 9, **dadurch gekennzeichnet, dass** sie eine Zuführvorrichtung (2) aufweist, die so eingerichtet ist, dass sie den Zellstrahl (11) erzeugt und ihn auf den Differenzierungsbereich (17) richtet, wobei die Zuführvorrichtung (2) mindestens teilweise unabhängig von dem optischen Detektionssystem (3) beweglich ist.

11. Anlage nach Anspruch 10, **dadurch gekennzeichnet, dass** die Zuführvorrichtung (2) eine Kammer (6) aufweist, die einen ersten Hohlraum (9) zur Aufnahme eines Mantelfluids und einen zweiten Hohlraum (10) hat, der den ersten Hohlraum (9) verlängert, eine Nadel (7) zum Injizieren der Zellen (26), die mindestens teilweise in der Kammer (6) untergebracht ist und zum zweiten Hohlraum (10) hin offen ist, an deren Stelle die Zellen (26) und das Mantelfluid aufeinandertreffen, um den Zellstrahl (11) zu bilden, sowie ein Positionierungselement (35), das so eingerichtet ist, dass es mindestens die Kammer (6) und die Injektionsnadel (7) in mindestens einer Bewegungsrichtung gemeinsam bewegt.

12. Anlage nach Anspruch 11, **dadurch gekennzeichnet, dass** das Positionierungselement (35) so eingerichtet ist, dass es die Kammer (6) und die Injektionsnadel (7) in der Emissionsrichtung der von der Lichtstrahlquelle (12) stammenden Lichtstrahlung (16) und/oder in der Richtung im rechten Winkel zu der Emissionsrichtung der von der Lichtstrahlquelle (12) stammenden Lichtstrahlung (16) bewegt; so dass der Zellstrahl (11) in einer bestimmten Position in dem Differenzierungsbereich (17) positioniert wird.

13. Anlage nach einem der Ansprüche 11 und 12, **dadurch gekennzeichnet, dass** das Positionierungselement (35) außerdem so eingerichtet ist, dass es die Kammer (6) und die Injektionsnadel (7) dreht, um die Zellen (26) in dem Zellstrahl (11) auszurichten.

14. Anlage nach einem der Ansprüche 1 bis 13, **dadurch gekennzeichnet, dass** die vorbestimmten Parameter zur Unterscheidung der Vielzahl von Zellen (26) in einem Strahl solcher Zellen (11) die X- und Y-Chromosomen sind.

15. Verfahren zur Behandlung durch Durchflusszytometrie, insbesondere von spermienartigen Zellen, insbesondere zur Geschlechtsbestimmung von tierischem Samen, unter Verwendung einer Anlage nach einem der Ansprüche 1 bis 14, **dadurch gekennzeichnet, dass** es einen ersten Schritt des Zentrierens der fokussierten Lichtstrahlung, die von der Lichtstrahlquelle und der mindestens einen Sammelvorrichtung kommt, mittels eines optischen Gerüsts auf dem Differenzierungsbereich aufweist.

16. Verfahren nach Anspruch 15, **dadurch gekennzeichnet, dass** die Anlage eine Zuführvorrichtung (2) aufweist, die so eingerichtet ist, dass sie den Zellstrahl (11) erzeugt und ihn auf den Differenzierungsbereich (17) richtet, wobei die Zuführvorrichtung (2) mindestens teilweise unabhängig von dem optischen Detektionssystem (3) beweglich ist; und das Verfahren einen zweiten Schritt des Zentrierens des Zellstrahls (11) auf dem Differenzierungsbereich (17) aufweist, unabhängig von dem ersten Schritt des Zentrierens.

## Claims

1. Flow cytometry installation, in particular for treating sperm type cells and more particularly for sexing animal semen, comprising an optical detection system (3) configured to differentiate, according to predetermined parameters, a plurality of cells (26) in a jet of such cells (11) directed towards a differentiation zone (17), said optical detection system being provided with a source of light radiation (12) configured to emit light radiation (16) focused on said differentiation zone (17), at least one detector (14) configured to detect an amount of light re-emitted by said cells (26) that are illuminated, and with at least one collector (15) that is focused, at a first side, on said differentiation zone (17) and at a second side which is an opposite side to said first side, on said at least one detector (14), said optical detection system being configured such that said at least one collector (15) has a magnification less than 10; and **characterized in that** said at least one detector (14) has a zone of vision (32) having a surface area (34) at least 10 times greater than a surface area of the jet of cells (11) at the location of said differentiation zone (17).

2. Installation according to claim 1, **characterized in that** said magnification of said at least one collector (15) is less than 8, preferably less than 5, and more preferably less than 2; while the ratio of said surface area (34) of said zone of vision (32) of said at least one detector (14) to said surface area of said jet of cells (11) is comprised between approximately 10 and approximately 1000, preferably between 50 and 500, more preferably between 150 and 350, and more preferably is equal to approximately 250.

3. Installation according to one of claims 1 and 2, **characterized in that** said at least one collector (15) has a first biconvex lens (29) arranged on said first side and focused on said differentiation zone (17), a second biconvex lens (30) arranged on said second side and focused on said at least one detector (14), and optionally a filter member (31) interposed between said first and second biconvex lenses (29, 30).

4. Installation according to claim 3, **characterized in that** said first biconvex lens (29) is configured to collect the light emitted by said cells (26) illuminated by said source of light radiation (12) in said differentiation zone (17), and said second biconvex lens (30) is configured to focus said collected light towards said zone of vision (32) of said at least one detector (14).

5. Installation according to any one of claims 1 to 4, **characterized in that** said at least one detector (14) is a photomultiplier.

6. Installation according to any one of claims 1 to 5, **characterized in that** said optical detection system (3) comprises two collectors (15) and two detectors (14), of which one of said collectors (15) and one of said detectors (14) are disposed in an emission direction of said light radiation (16), and of which the other of said collectors (15) and the other of said detectors (14) are disposed in a direction at a right angle to said emission direction of said light radiation (16).

7. Installation according to any one of claims 1 to 6, **characterized in that** said source of light radiation(12) is a laser.

8. Installation according to any one of claims 1 to 7, **characterized in that** said optical detection system (3) further comprises a shaping device (13) for shaping said light radiation (16) coming from said source (12), which device (13) has a radiation expander, a cylindrical lens for shaping said radiation and a convergent lens (28) focusing said magnified and shaped light radiation (16) towards said differentiation zone (17).

9. Installation according to claim 8, **characterized in that** said cylindrical lens has a focal length comprised between approximately 1 m and approximately 5 m, and preferably equal to approximately 3 m.

10. Installation according to any one of claims 1 to 9, **characterized in that** it comprises a supply device (2) configured to generate said jet of cells (11) and direct it towards said differentiation zone (17), which supply device (2) is at least partly movable independently of said optical detection system (3).

11. Installation according to claim 10, **characterized in that** said supply device (2) comprises a chamber (6) having a first cavity (9) provided to receive a sheath fluid and a second cavity (10) extending said first cavity (9), a needle (7) for injecting said cells (26) which is housed at least partly in said chamber (6) and which is open to said second cavity (10), at the location of which said cells (26) and said sheath fluid meet to form said jet of cells (11), as well as a positioning member (35) configured to move together with each other at least said chamber (6) and said injection needle (7) in at least one direction of movement.

12. Installation according to claim 11, **characterized in that** said positioning member (35) is configured to move said chamber (6) and said injection needle (7) in the direction of emission of the light radiation (16) coming from said source of light radiation (12) and/or in the direction at a right angle to the direction of emission of the light radiation (16) coming from said source of light radiation(12); so as to position said jet of cells (11) in a defined position in said differentiation zone (17).

13. Installation according to one of claims 11 and 12, **characterized in that** said positioning member (35) is furthermore configured to move said chamber (6) and said injection needle (7) rotationally so as to orient said cells (26) in said jet of cells (11).

14. Installation according to any one of claims 1 to 13, **characterized in that** said predetermined parameters for differentiating said plurality of cells (26) in a said jet of such cells (11) are the X and Y chromosomes.

15. Method of treating, by flow cytometry, in particular cells of sperm type, more particularly for sexing animal semen, using an installation according to any one of claims 1 to 14, **characterized in that** it comprises a first step of centering, on said differentiation zone, via an optical skeleton, the focused light radiation coming from said light radiation source and from said at least one collector.

16. Method according to claim 15, **characterized in that** said installation comprises a supply device (2) configured to generate said jet of cells (11) and direct it towards said differentiation zone (17), which supply device (2) is at least partly movable independently of said optical detection system (3); and said method comprises a second step of centering said jet of cells (11) on said differentiation zone (17), independently of said first centering step.
